# FASCICULE DE BREVET EUROPEEN

(11) **EP 0 904 691 B1**
(45) Date de publication et mention de la délivrance du brevet: **11.07.2001**
(21) Numéro de dépôt: 98420166.5
(22) Date de dépôt: 23.09.1998
(51) Int. Cl.: A01K 89/01

(54) **Bobine de moulinet de pêche à flasque antérieur ondulé**
Spule mit oberen gewellten Spulenrand für Angelrollen
Spool with corrugated upper flange for fishing reel

(30) Priorité: 29.09.1997 FR 9712525
(43) Date de publication de la demande: 31.03.1999
(73) Titulaire: Mitchell Sports, 74970 Marignier (FR)
(72) Inventeur: Bernard, Jean, 74950 Scionzier (FR); Platel, Frédéric, 74970 Marignier (FR)
(74) Mandataire: Poncet, Jean-François

(56) Documents cités:
- DE-A- 4 211 145

## Description

La présente invention concerne les moulinets de pêche à bobine fixe et récupérateur rotatif de fil, dans lesquels un tambour de récupérateur rotatif entraîné en rotation axiale par une manivelle porte un arceau de récupérateur. L'arceau du récupérateur est escamotable, et est pour cela articulé sur le tambour de récupération pour pivoter entre une position escamotée libérant le fil de pêche pour permettre son dévidement axial hors de la bobine, et une position de récupération enveloppant la bobine pour récupérer et guider le fil et pour l'enrouler sur la bobine lors de la rotation du tambour de récupérateur.

En utilisation, le moulinet de pêche est placé sur la canne à pêche avec son arbre antéropostérieur orienté parallèlement à la canne à pêche, la bobine étant montée sur l'arbre antéropostérieur du moulinet. La bobine comprend une gorge périphérique de récupération de fil limitée par un flasque antérieur et par un flasque postérieur.

Lors d'une partie de pêche au lancer, le fil est initialement enroulé sur la bobine. Le pêcheur pivote l'arceau de récupérateur pour l'amener en position escamotée, et effectue le lancer au cours duquel le fil se dévide rapidement hors de la bobine. Pendant cette opération de lancer, le fil vient frotter sur la périphérie du flasque antérieur de bobine.

Dans les moulinets connus, on a déjà cherché à réduire les frottements du fil sur la périphérie du flasque antérieur rigide non déformable et non déplaçable de bobine, pour augmenter la portée du lancer. Pour cela, on a prévu un état de surface périphérique du flasque antérieur tel que le fil glisse le mieux possible. Dans certains moulinets, la périphérie du flasque antérieur a été réalisée en céramique.

Ces solutions conduisent généralement à une augmentation sensible du coût de production du moulinet, et les résultats ne sont pas durables à cause des risques de dégradation de la surface périphérique du flasque antérieur de bobine, dégradation résultant de l'usure de la surface et des chocs éventuels inévitables au cours de l'utilisation du moulinet.

Dans le document DE 42 11 145 A, on a aussi cherché à réduire les frottements du fil sur le flasque antérieur de bobine en remplaçant ce flasque antérieur rigide, non déformable et non déplaçable, par des moyens de retenue antérieurs mobiles et déformables, constitués de deux leviers en arc articulés à une extrémité sur le corps de bobine et repoussés radialement vers l'extérieur par des ressorts. L'extrémité libre des leviers reste en principe à l'écart du corps de bobine, et cet écart constitue une discontinuité des moyens de retenue antérieurs de fil. Les ressorts sont très faibles, de façon que le fil puisse déplacer les leviers et adapter ainsi à la quantité de fil présente sur la bobine le diamètre des moyens de retenue antérieurs de fil. Un tel dispositif présente des défauts de fonctionnement graves, qui ont empêché son exploitation commerciale. En effet, lorsque du fil est enroulé sur la bobine, la partie de fil enroulée sur la bobine freine le déplacement radial des leviers, de sorte qu'ils ne sont plus efficacement sollicités par les ressorts faibles. Il en résulte un risque important d'enrouler du fil sur un diamètre supérieur à celui occupé par les leviers. Le fil peut ensuite se dévider axialement par paquets lors d'un lancer, provoquant la création de boucles et de noeuds du fil.

Le problème proposé par la présente invention est de concevoir un nouveau moyen permettant de réduire le frottement du fil sur la périphérie d'un moyen de retenue antérieur de fil dans une bobine de moulinet de pêche, afin de réduire l'effort nécessaire de l'utilisateur pour atteindre une distance donnée de lancer, ou afin d'augmenter la portée du lancer à puissance donnée de jet, tout en assurant une retenue efficace du fil pour éviter son dévidement intempestif par paquets de boucles lors d'un lancer.

La solution selon l'invention consiste à utiliser un flasque antérieur rigide, non déformable et non déplaçable, et à réduire les points de contact entre le fil et la surface périphérique du flasque antérieur de bobine, de façon à réduire les frottements.

Ainsi, pour atteindre ces objets ainsi que d'autres, une bobine de moulinet de pêche selon l'invention, conformée pour être montée sur un arbre antéropostérieur de moulinet de pêche, comprend une gorge périphérique de réception de fil limitée par des moyens de retenue antérieurs de fil et par un flasque postérieur, les moyens de retenue antérieurs de fil comportant au moins deux zones périphériques à rayon réduit, c'est-à-dire dont le rayon est inférieur à celui des zones périphériques intermédiaires qui les séparent ; selon l'invention, les moyens de retenue antérieurs de fil sont constitués d'un flasque antérieur rigide, non déformable et non déplaçable, ayant au moins deux zones périphériques à rayon progressivement réduit.

Dans un mode de réalisation avantageux, le flasque antérieur comporte trois zones périphériques à rayon réduit, régulièrement réparties selon le pourtour du flasque antérieur.

De préférence, les zones intermédiaires de flasque antérieur, séparant les zones à rayon réduit, ont un profil périphérique arrondi favorisant le glissement périphérique régulier du fil au cours d'une étape de lancer.

Selon l'invention, les réductions de rayon des zones périphériques à rayon réduit peuvent être sensiblement égales ou différentes.

La valeur de la réduction de rayon des zones à rayon réduit peut avantageusement être choisie pour correspondre sensiblement à la hauteur radiale de bobine occupée par la quantité de fil bobiné utilisée pour un lancer nominal, c'est-à-dire pour un lancer normal dans les conditions d'utilisation du moulinet. En pratique, la réduction de rayon peut être comprise entre environ 10 % et 35 % du rayon des zones périphériques intermédiaires.

D'autres objets, caractéristiques et avantages de la présente invention ressortiront de la description suivante de modes de réalisation particuliers, faite en relation avec les figures jointes, parmi lesquelles:
- la figure 1 illustre en vue de côté une canne à pêche munie d'un moulinet de pêche, représentée au cours de l'opération de lancer ;
- la figure 2 est une vue de côté d'une bobine de moulinet de pêche selon un premier mode de réalisation de la présente invention ;
- la figure 3 est une vue de face de la bobine de la figure 2 ;
- la figure 4 est une vue en coupe selon le plan A-A de la bobine de la figure 2 ;
- la figure 5 est une vue de côté d'une bobine de moulinet de pêche selon un second mode de réalisation de la présente invention ;
- la figure 6 est une vue de face de la bobine de la figure 5 ;
- la figure 7 est une vue en coupe longitudinale selon le plan B-B de la bobine de la figure 5 ;
- la figure 8 est une vue de côté d'une bobine de moulinet de pêche selon un troisième mode de réalisation de la présente invention ;
- la figure 9 est une vue de face de la bobine de la figure 8 ;
- la figure 10 est une vue en coupe longitudinale selon le plan C-C de la bobine de la figure 8 ; et
- la figure 11 est une vue de côté d'une bobine de moulinet de pêche de l'art antérieur.

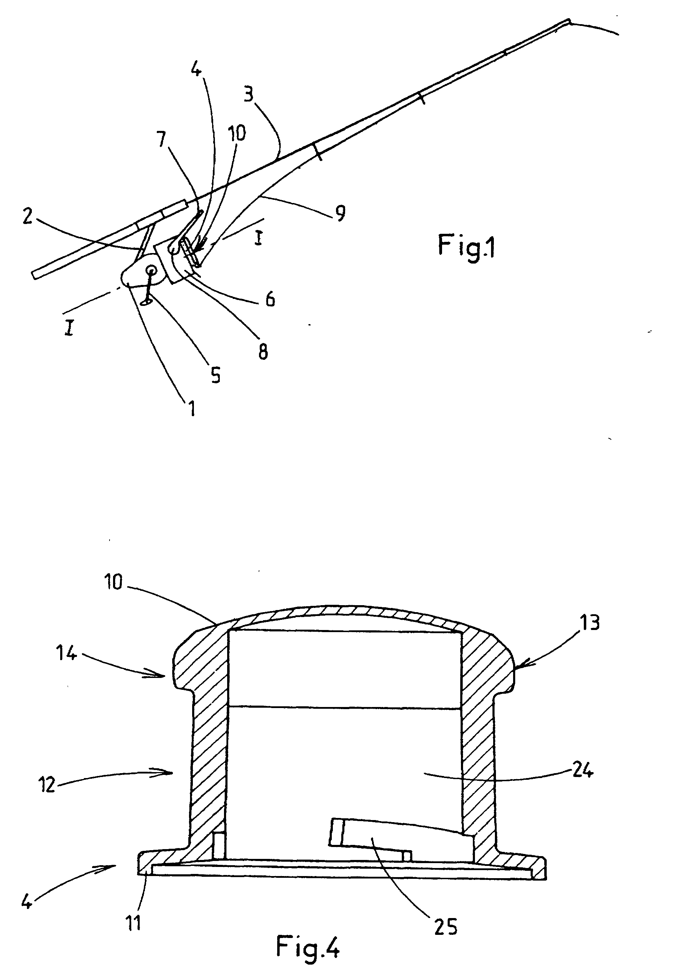

Comme illustré par la figure 1, les moulinets de pêche habituellement utilisés pour la pêche au lancer comprennent un corps de moulinet 1 muni de moyens de fixation 2 sur une canne à pêche 3. Le corps de moulinet 1 porte une bobine 4 dont l'axe longitudinal I-I de symétrie est sensiblement parallèle à la direction de développement de la canne à pêche 3. Des moyens de récupération de fil comprennent une manivelle 5, actionnable par l'utilisateur et permettant d'entraîner en rotation un tambour 6 de récupérateur de fil monté rotatif en rotation axiale selon l'axe I-I de la bobine 4 par l'intermédiaire d'un mécanisme de transmission interne disposé dans le corps de moulinet 1. Le tambour 6 porte un arceau 7 escamotable de récupérateur de fil, l'arceau 7 étant articulé sur le tambour 6 selon un axe de rotation 8 transversal pour pivoter entre une position escamotée représentée sur la figure 1, libérant le fil de pêche 9 pour permettre son dévidement hors de la bobine 4, et une position de récupération dans laquelle l'arceau 7 de récupérateur enveloppe la bobine 4 pour récupérer et guider le fil 9 et pour l'enrouler sur la bobine 4 lors de la rotation du tambour 6.

Sur la figure 1, pendant l'opération de lancer, le fil 9 est tiré hors de la bobine 4 par l'inertie du lest fixé à l'extrémité libre du fil 9, et le fil 9 se dévide de la bobine en tournant autour du flasque antérieur 10 de la bobine 4. Au cours de ce mouvement, le fil 9 frotte nécessairement sur la zone périphérique du flasque antérieur 10 de bobine.

Pour réduire ce frottement, et augmenter les performances du lancer, l'invention prévoit un flasque antérieur 10 de bobine, rigide, non déformable et non déplaçable par rapport au corps de bobine, et comportant au moins deux zones périphériques à rayon progressivement réduit.

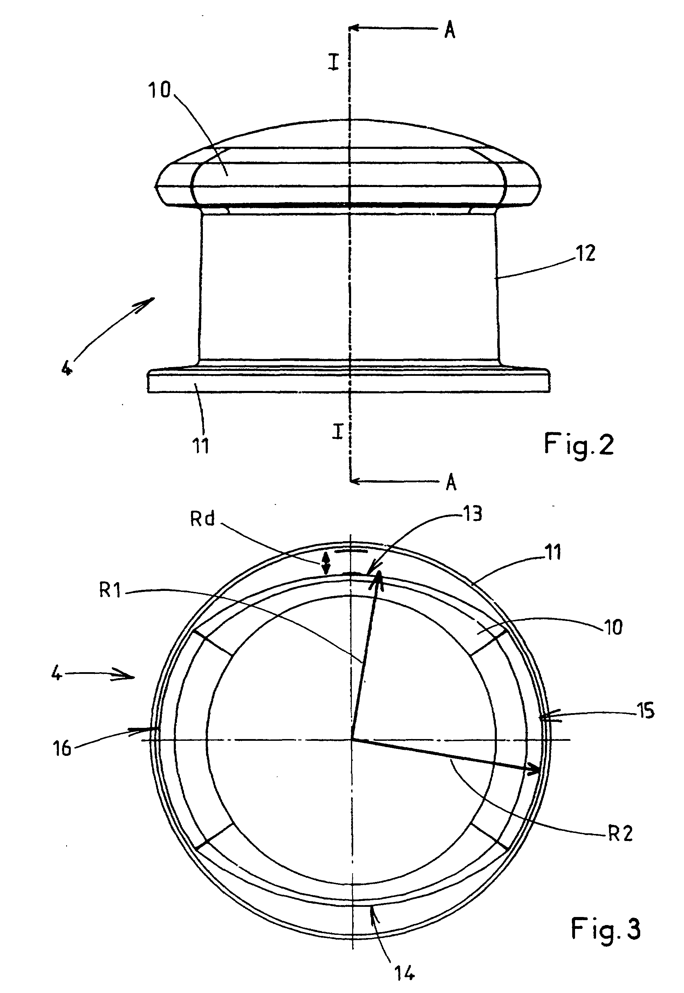

Les figures 2 à 4 illustrent un premier mode de réalisation d'une telle bobine selon l'invention, comportant deux zones périphériques à rayon progressivement réduit.

Sur ces figures, on distingue, sur la bobine 4, le flasque antérieur 10, un flasque postérieur 11, et une gorge périphérique 12 de réception de fil limitée par le flasque antérieur 10 et par le flasque postérieur 11.

Le flasque antérieur 10 comporte une première zone périphérique à rayon réduit 13, une seconde zone périphérique à rayon réduit 14 diamétralement opposée à la première zone périphérique à rayon réduit 13, une première zone périphérique intermédiaire 15 et une seconde zone périphérique intermédiaire diamétralement opposées l'une à l'autre et séparant les zones périphériques à rayon réduit 13 et 14.

Les zones périphériques intermédiaires 15 et 16 de flasque antérieur 10 se raccordent aux zones périphériques à rayon réduit 13 et 14 adjacentes selon un profil périphérique à rayon régulièrement variable, comme illustré sur la figure 3, favorisant le glissement périphérique régulier du fil au cours d'une étape de lancer.

Le rayon R1 de la zone périphérique à rayon réduit 13 ou 14 est inférieur au rayon R2 des zones périphériques intermédiaires 15 et 16. La réduction Rd de rayon de la zone périphérique à rayon réduit, c'est-à-dire la différence entre le rayon R2 des zones intermédiaires 15 et 16 et le rayon R1 des zones à rayon réduit 13 et 14, est choisie pour correspondre sensiblement à la hauteur radiale de bobine occupée par la quantité de fil bobiné utilisée pour un lancer nominal. En pratique, cette réduction Rd de rayon peut être comprise entre environ 10 % et 35 % du rayon R2 des zones périphériques intermédiaires 15 et 16. Par exemple, pour la pêche de la carpe, la capacité classique des bobines est de 300 mètres de fil de 28/100 millimètres et les lancers peuvent atteindre 100 mètres soit environ 33 % de la capacité totale. La réduction Rd de rayon correspond à la zone de bobine occupée par ces 100 mètres de fil.

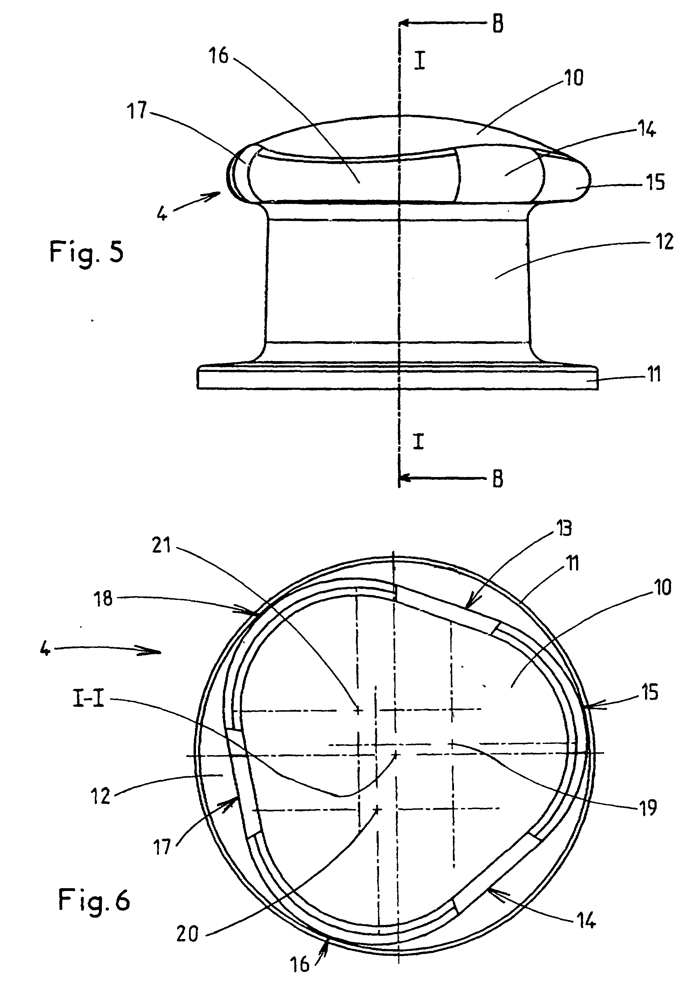

Dans le second mode de réalisation illustré sur les figures 5 à 7, la bobine selon la présente invention reprend les caractéristiques du mode de réalisation des figures 2 à 4, à la différence que le flasque antérieur 10 comporte trois zones périphériques à rayon réduit, régulièrement réparties selon le pourtour du flasque antérieur 10.

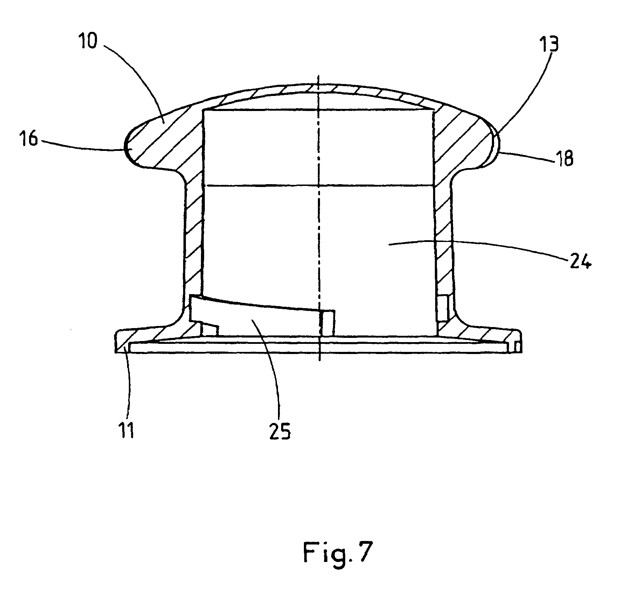

Ainsi, on distingue une première zone périphérique à rayon réduit 13, une seconde zone périphérique à rayon réduit 14 et une troisième zone périphérique à rayon réduit 17, avec une première zone périphérique intermédiaire 15, une seconde zone périphérique intermédiaire 16 et une troisième zone périphérique intermédiaire 18. Chacune des zones périphériques à rayon réduit 13, 14 et 17 peut présenter un profil rectiligne, comme illustré sur la figure 6, se raccordant tangentiellement à des zones périphériques intermédiaires 15, 16 et 18 à profil circulaire centré respectivement sur des centres 19, 20 et 21 équidistants de l'axe I-I de bobine. Dans la réalisation illustrée, les réductions Rd de rayon des zones à rayon réduit 13, 14 et 17 sont égales.

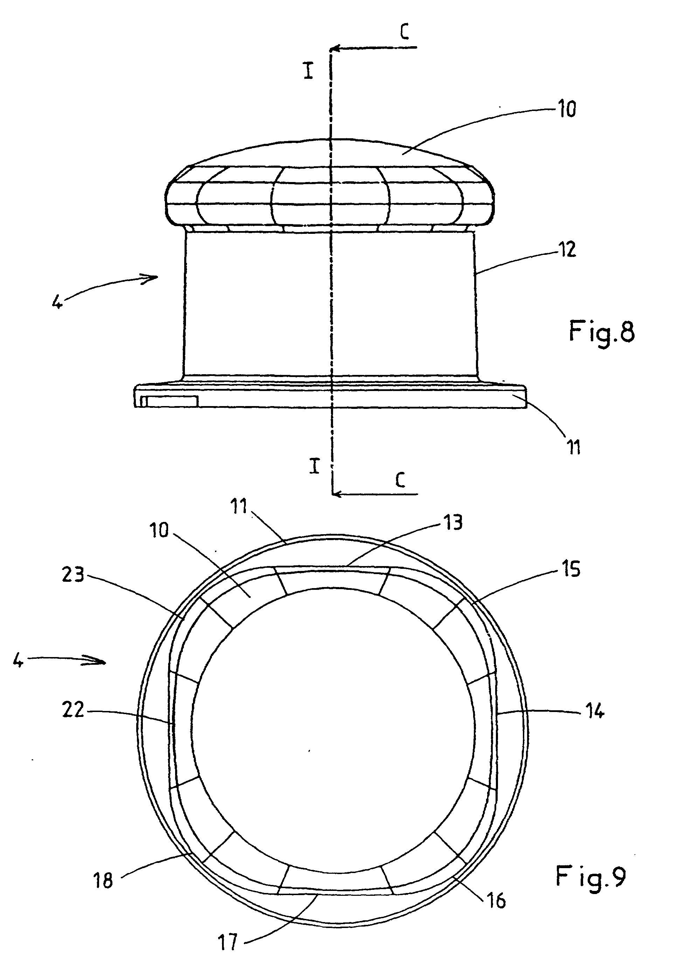

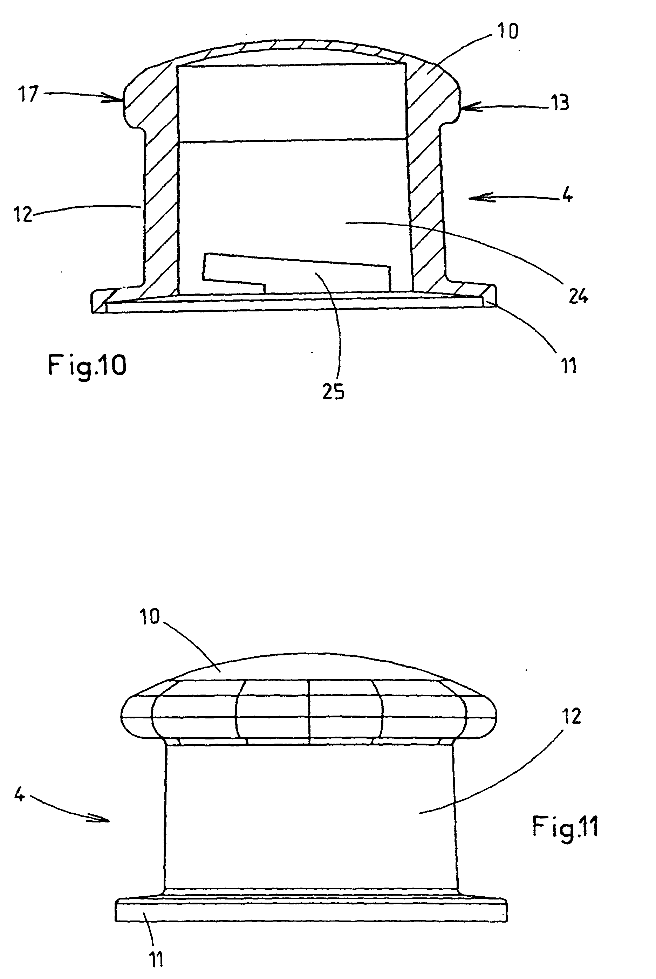

La bobine de moulinet selon le troisième mode de réalisation des figures 8 à 10 reprend les éléments essentiels des modes de réalisation des figures 2 à 7, et les éléments similaires sont repérés par les mêmes références numériques.

Ce troisième mode de réalisation diffère en ce que le flasque antérieur 10 comporte quatre zones périphériques à rayon progressivement réduit. Ainsi, on retrouve une première zone périphérique à rayon réduit 13, une seconde zone périphérique à rayon réduit 14, une troisième zone périphérique à rayon réduit 17, ainsi qu'une quatrième zone périphérique à rayon réduit 22. Les zones périphériques à rayon réduit sont séparées par des zones périphériques intermédiaires à savoir une première zone périphérique intermédiaire 15, une seconde zone périphérique intermédiaire 16, une troisième zone périphérique intermédiaire 18, ainsi qu'une quatrième zone périphérique intermédiaire 23. Les différentes zones périphériques à rayon réduit 13, 14, 17 et 22 sont régulièrement réparties selon le pourtour du flasque antérieur 10, et elles présentent un profil sensiblement linéaire se raccordant tangentiellement aux zones périphériques intermédiaires adjacentes 15, 16, 18 et 23 qui sont elles-mêmes à profil circulaire.

On comprendra que d'autres formes de zones périphériques à rayon réduit et de zones périphériques intermédiaires peuvent être envisagées sans sortir du cadre de la présente invention, dès lors que le fil peut glisser régulièrement sur la périphérie du flasque antérieur 10 au cours de sa sortie axiale, hors de la bobine, parallèlement à l'axe I-I, pendant une opération de lancer.

La bobine de moulinet de pêche selon la présente invention peut être solidaire de l'arbre antéropostérieur de moulinet, auquel elle est fixée par tout moyen connu.

En alternative, la bobine 4 peut être montée à l'extrémité antérieure de l'arbre antéropostérieur du moulinet de pêche de façon amovible, pour être interchangeable.

Les modes de réalisation illustrés sur les figures 2 à 10 correspondent à une bobine interchangeable, adaptable sur un moyeu antérieur solidaire de l'extrémité antérieure de l'arbre antéropostérieur du moulinet, auquel elle est raccordée par un système de verrouillage à baïonnette. Ainsi, on distingue, sur les figures 4, 7 et 10 en coupe longitudinale, une cavité intérieure cylindrique 24 ouverte à l'arrière de la bobine à travers le flasque postérieur 11, et comportant un logement intérieur hélicoïdal 25 destiné à coopérer avec un ergot du moyeu d'arbre de moulinet pour retenir la bobine 4 de façon amovible. D'autres moyens de fixation peuvent être prévus, qui sont à la portée de l'homme du métier.

A titre de comparaison, la figure 11 représente une bobine de l'art antérieur, dans laquelle la gorge périphérique 12 de réception de fil est bordée d'un flasque postérieur 11 similaire du flasque postérieur des figures 2 à 10, et d'un flasque antérieur 10 dont la périphérie présente un profil circulaire à rayon sensiblement constant sur lequel le fil de pêche frotte en permanence pendant une opération de lancer.

La présente invention n'est pas limitée aux modes de réalisation qui ont été explicitement décrits, mais elle en inclut les diverses variantes et généralisations contenues dans le domaine des revendications ci-après.

## Revendications

1. Bobine (4) de moulinet de pêche, conformée pour être montée sur un arbre antéropostérieur de moulinet de pêche, et ayant une gorge périphérique (12) de réception de fil (9) limitée par des moyens de retenue antérieurs de fil et par un flasque postérieur (11), les moyens de retenue antérieurs de fil comportant au moins deux zones périphériques à rayon réduit (13, 14, 17, 22), caractérisée en ce que les moyens de retenue antérieurs de fil sont constitués d'un flasque antérieur (10) rigide, non déformable et non déplaçable, ayant au moins deux zones périphériques à rayon progressivement réduit.

2. Bobine selon la revendication 1, caractérisée en ce que le flasque antérieur (10) comporte trois zones périphériques à rayon réduit (13, 14, 17), régulièrement réparties selon le pourtour du flasque antérieur (10).

3. Bobine selon l'une des revendications 1 ou 2, caractérisée en ce que les zones périphériques intermédiaires (15, 16, 18, 23) se raccordent aux zones périphériques à rayon réduit (13, 14, 17, 22) adjacentes selon un profil périphérique à rayon régulièrement variable favorisant le glissement périphérique régulier du fil (9) au cours d'une étape de lancer.

4. Bobine selon l'une quelconque des revendications 1 à 3, caractérisée en ce que les réductions (Rd) de rayon des zones périphériques à rayon réduit (13, 14, 17, 22) sont sensiblement égales.

5. Bobine selon la revendication 4, caractérisée en ce que la réduction (Rd) de rayon des zones périphériques à rayon réduit (13, 14, 17, 22) est choisie pour correspondre sensiblement à la hauteur radiale de bobine occupée par la quantité de fil bobiné utilisée pour un lancer nominal.

6. Bobine selon la revendication 5, caractérisée en ce que la réduction (Rd) de rayon des zones périphériques à rayon réduit (13, 14, 17, 22) est comprise entre environ 10 % et 35 % du rayon (R2) des zones périphériques intermédiaires (15, 16, 18, 23).

7. Moulinet de pêche caractérisé en ce qu'il comprend une bobine selon l'une quelconque des revendications 1 à 6.

## Patentansprüche

1. Spule (4) für Angelrollen, die dazu vorgesehen ist, auf eine Längsspindel der Angelrolle aufgesetzt zu werden, und die eine äußere periphere Einkehlung (12) für die Aufnahme einer Schnur (9) aufweist, die durch vordere Haltemittel für die Schnur und durch eine hintere Wange (11) begrenzt ist, wobei die vorderen Haltemittel für die Schnur mindestens zwei periphere Bereiche mit vermindertem Radius (13, 14, 17, 22) aufweisen, dadurch gekennzeichnet, daß die vorderen Haltemittel für die Schnur durch eine vordere starre, nicht deformierbare und nicht verschiebbare Wange (10) gebildet ist, die mindestens zwei periphere Bereiche mit sich zunehmend verringerndem Radius aufweist.

2. Spule nach Anspruch 1, dadurch gekennzeichnet, daß die vordere Wange (10) drei periphere Bereiche mit vermindertem Radius (13, 14, 17) aufweist, die gleichmäßig entlang des Umfangs der vorderen Wange (10) verteilt sind.

3. Spule nach einem der Ansprüche 1 oder 2, dadurch gekennzeichnet, daß die dazwischenliegenden peripheren Bereiche (15, 16, 18, 23) mit den benachbarten peripheren Bereichen mit vermindertem Radius (13, 14, 17, 22) verbunden sind, entsprechend einem peripheren Profil mit einem gleichmäßig variablen Radius, wodurch das gleichmäßige Randgleiten der Schnur (9) auf einem Stück beim Auswerfen begünstigt wird.

4. Spule nach einem der Ansprüche 1 bis 3, dadurch gekennzeichnet, daß die Verringerungen (Rd) des Radius' der peripheren Bereiche mit vermindertem Radius (13, 14, 17, 22) im wesentlichen gleich sind.

5. Spule nach Anspruch 4, dadurch gekennzeichnet, daß die Verringerung (Rd) des Radius' der peripheren Bereiche mit vermindertem Radius (13, 14, 17, 22) so gewählt ist, daß sie im wesentlichen der radialen Höhe der Spule entspricht, die durch die Menge aufgewickelter Schnur besetzt ist, die für ein Auswerfen nominal benötigt wird.

6. Spule nach Anspruch 5, dadurch gekennzeichnet, daß die Verringerung (Rd) des Radius' der peripheren Bereiche mit vermindertem Radius (13, 14, 17, 22) zwischen etwa 10 % und 35 % des Radius' (R2) der dazwischenliegenden peripheren Bereiche (15, 16, 18, 23) beträgt.

7. Angelrolle, dadurch gekennzeichnet, daß sie eine Spule nach einem der Ansprüche 1 bis 6 aufweist.

## Claims

1. A fishing reel spool (4), conformed to be mounted on a fishing reel anterior-posterior shaft, and having a peripheral groove (12) to receive line (9) limited by anterior line retaining means and by a posterior flange (11), the anterior line retaining means including at least two peripheral areas of reduced radius (13, 14, 17, 22), characterised in that the anterior line retaining means consist of a rigid, non-deformable and immovable anterior flange (10) having at least two peripheral areas of progressively reduced radius.

2. A spool according to claim 1, characterised in that the anterior flange (10) includes three peripheral areas (13, 14, 17) of reduced radius, regularly distributed around the perimeter of the anterior flange (10).

3. A spool according to either claim 1 or claim 2, characterised in that the intermediate peripheral areas (15, 16, 18, 23) are connected to the adjacent peripheral areas (13, 14, 17, 22) of reduced radius with a peripheral profile having a regularly varying radius to encourage regular peripheral sliding of the line (9) during casting.

4. A spool according to any of claims 1 to 3, characterised in that the radius reductions (Rd) of the peripheral areas (13, 14, 17, 22) of reduced radius are substantially equal.

5. A spool according to claim 4, characterised in that the radius reduction (Rd) of the peripheral areas (13, 14, 17, 22) of reduced radius is chosen to correspond substantially to the radial height of the spool occupied by the quantity of spooled line used for nominal casting.

6. A spool according to claim 5, characterised in that the radius reduction (Rd) of the peripheral areas (13, 14, 17, 22) of reduced radius is from approximately 10% to approximately 35% of the radius (R2) of the intermediate peripheral areas (15, 16, 18, 23).

7. A fishing reel characterised in that it includes a spool according to any of claims 1 to 6.
